# EUROPEAN PATENT APPLICATION

(11) **EP 4 265 487 A1**
(43) Date of publication of application: **25.10.2023**
(21) Application number: 22168978.9
(22) Date of filing: 20.04.2022
(51) Int. Cl.: B60S 3/06, A61G 5/10, A46B 13/00, B60S 3/04

(54) **WHEEL CLEANING DEVICE**

(71) Applicant: Safai-Naeeni, Reza, 1007 Lausanne (CH)
(72) Inventor: Safai-Naeeni, Reza, 1007 Lausanne (CH)
(74) Representative: KATZAROV S.A.

(57) **Abstract**

The present invention relates to a wheel cleaning device comprising a wheel support module adapted to support said wheel in a rotative manner, a cleaning liquid spraying module adapted to spray high pressure cleaning liquid onto a wheel's surface, characterized in that it further comprises a wheel scanning module adapted to scan a surface of the wheel and determine the lateral edges of the wheel, and a control module adapted to control the cleaning liquid spraying module based on the results of the wheel scanning module so as to limit the cleaning liquid spraying zone within the detected lateral edges of the wheel so as to spray cleaning liquid exclusively onto the surface of the wheel.

## Description

### Technical Field

The present invention relates to consumer goods providing solutions for people suffering from handicaps. More particularly the invention relates to a device for cleaning wheels and even more particularly to a device for cleaning the wheels of any kind of wheelchairs.

### Background of the art

Wheelchairs are often used as a mobility device for individuals with mobility impairments. The wheelchair may be moved by motors or other actuators located on the wheelchair but may also be moved by the user himself who rotates the back wheels. As such, the wheelchair may be used by the individual to navigate an environment.

In the same manner as for any locomotion tools, the wheels of the wheelchairs are subject to leaves, mood, rain and all type of dirt which lays along the roads. However, while a pedestrian may clean his shoes on a doormat, the person on the wheelchair needs a specific means for cleaning the wheels of its wheelchair. Moreover, considering that wheelchairs are particularly used in environment needing enhanced cleanliness such as hospitals and the same, such a cleaning mean is even more needed.

Keeping that in mind, one of the biggest challenges that a disabled wheelchair user faces when using a wheelchair is actually cleaning the wheels of the wheelchair since his handicap limits his movement. For this reason, wheelchair wheels' cleaning means have been created to facilitate their cleaning.

Wheelchair wheels' cleaning station have been manufactured for a long time. All of them use a rotary cylindrical brush to clean the wheel that rest on rollers. Some station uses water streams that wet the cylindrical brush, and on the other hand some uses dry cleaning but are less effective than wet cleaning.

Wet cleaning stations mostly use a water bath where the wheels are dipped, however such cleaning have shown low effectiveness. Such a cleaning device is shown in Patent application JP3048370U.

The existing cleaning stations therefore only use wet or dry brushes, which are inefficient against impurities stuck in a wheel's grooves, especially in case of electric wheelchairs. The problem of dirt in the grooves remains.

Therefore, there exists a need for a cleaning solution which addresses the issue of dirt, mud, leaves and other impurities stuck on a wheelchair wheel, where manual cleaning is either impossible or tedious for the user and where the user can stay seated on the wheelchair while not being splashed by any type of cleaning liquid.

In this regard, a primary object of the invention is to solve the above-mentioned problems and more particularly to provide a cleaning device capable of efficiently cleaning wheels of a wheelchair without harming the people on or around the wheelchair, or non-waterproof elements of the manual and electric wheelchairs.

Another object of the invention it to provide a cleaning device capable of efficiently cleaning wheels of a wheelchair by detecting the exact position of the surface of the wheels to clean.

Another object of the invention it to provide a cleaning device capable of efficiently and automatically detect and switch mode for manual and electric wheelchair.

Another object of the invention it to provide a cleaning station using said cleaning device.

### Summary of the invention

The above problems are solved by the present invention which is a fully automatic wheelchairs' wheels cleaning station adapted to both manual and electric wheels chairs. The present invention shows the advantages of brushing, water jetting and drying the wheels, while the driver can stay seated without being harmed. A key feature of the invention resides in the precision and efficiency of the high-pressure water jets.

As mentioned, high-pressure water (or any kind of cleaning fluid) jets are a solution to the above technical problem, but they pose of problem of harming non-waterproof elements of the manual and electric wheelchairs, as well are the risk of spraying high-pressure water on, thus harming, the people on or around the wheelchair.

A solution would have been to elevate the high-pressure waterjet and direct it downwards to the wheels, but such apparatus would be on the way of the wheelchair, and would risk harming when raised or placed, and would be highly susceptible to breaking.

The present invention therefore precisely places the high-pressure water jet under the wheels of the wheelchair using positioning sensors, avoiding all above-mentioned problems.

A first aspect of the invention is a wheel cleaning device comprising a wheel support module adapted to support said wheel in a rotative manner, a cleaning liquid spraying module adapted to spray high pressure cleaning liquid onto a wheel's surface, characterized in that it further comprises a wheel scanning module adapted to scan a surface of the wheel and determine the lateral edges of the wheel, and a control module adapted to control the cleaning liquid spraying module based on the results of the wheel scanning module so as to limit the cleaning liquid spraying zone within the detected lateral edges of the wheel so as to spray cleaning liquid exclusively onto the surface of the wheel.

Advantageously, the device further comprises a brushing module adapted to brush said supported wheel.

According to a preferred embodiment of the present invention, the brushing module is a cylindrical brush adapted to come in contact with the wheel and to be rotated in a direction different from the wheel rotation or in the same rotation direction but at a different speed.

Preferably, the device further comprises a wheel detector adapted to automatically detect the presence of a wheel chosen from the group of an optical detector, a weight detector or similar.

In a preferred manner, the wheel detector is said wheel scanning module.

Advantageously, the device further comprises a wheel type identification module adapted to identify a wheel type and control the cleaning process accordingly.

Preferably, the wheel type identification module comprises an image capturing device and an AI software capable of identifying the type of wheel on the captured image and accordingly adapt the cleaning process.

According to a preferred embodiment of the present invention, the wheel support module comprises rollers disposed parallelly which are adapted to be rotated to drive the wheel in rotation or to be free to let the wheel rotate by itself.

Preferably, the wheel support module comprises at least two pairs of rollers comprising a first internal pair disposed a first height and adapted to support and maintain stable wheels presenting a first diameter and a second external pair disposed at a second height and adapted to support and maintain stable wheels presenting a second diameter, wherein the second diameter is larger than the first diameter.

Advantageously, the wheel scanning module comprises at least two sensors positioned on each side of the cleaning liquid spraying module in the width direction of the module.

In a preferred manner, the device further comprises a bridging element mounted on a linear actuation assembly and supporting the wheel scanning module at one end and the cleaning liquid spraying module at the other end configured to be moved back and forth along the width direction of the module.

According to a preferred embodiment of the present invention, the device further comprises a drying module adapted to spray high pressure air onto the wheel surface.

Preferably, the cleaning liquid spraying module comprises at least one nozzle connected to a High-pressure water pump that feeds the cleaning liquid.

Advantageously, the device further comprises drying and/or spraying nozzle positioning modules preferably disposed at the ends of the linear actuation assembly and adapted to lower and/or raise the nozzle to position it to clean/dry the Brush or the wheel.

A second aspect of the invention is a wheel cleaning station comprising a wheel cleaning device of the first aspect of the invention.

### Brief description of the drawings

Further particular advantages and features of the invention will become more apparent from the following non-limitative description of at least one embodiment of the invention which will refer to the accompanying drawings, wherein
- Figure 1 represents a general view of a preferred embodiment of the present invention;
- Figure 2 represents an exploded view of a preferred embodiment of the present invention;
- Figures 3A to 3C schematically represent different views of a cleaning module of a preferred embodiment of the present invention;
- Figure 4 schematically represent a view of a cleaning module of a preferred embodiment of the present invention.

### Detailed description of the invention

The present detailed description is intended to illustrate the invention in a non-limitative manner since any feature of an embodiment may be combined with any other feature of a different embodiment in an advantageous manner.

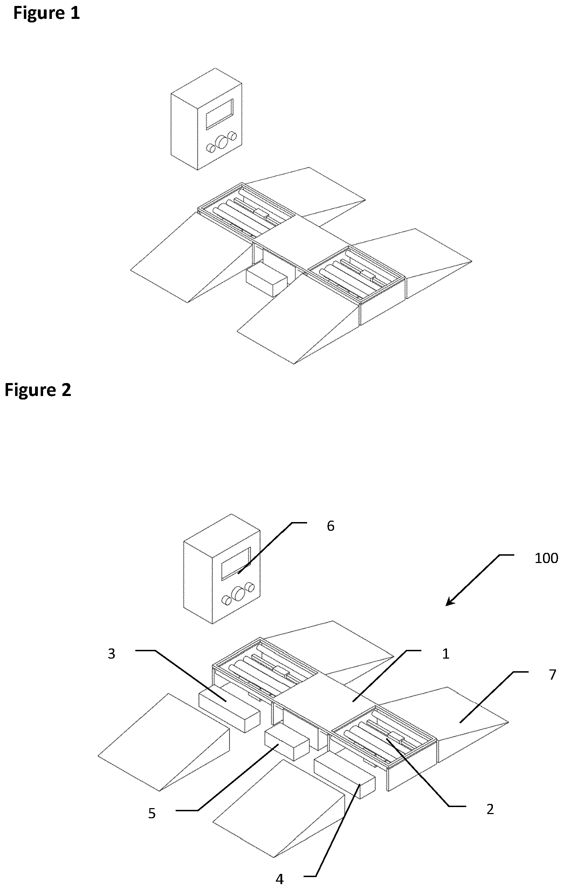

Figures 1 and 2 show a general view of a first embodiment of the invention which is a wheel cleaning station. It has to be noted that although the present description focuses on wheels of wheelchair, the present invention may be adapted to any similar vehicles such as golf carts, strollers and the same.

The wheel cleaning station 100 preferably comprises an actuation module 1, two cleaning modules 2, a cleaning liquid spraying module 3, a drying module 4 and a water extraction module 5. Additionally, the station 100 may comprise a control and command module 6, possibly ramps 7 and a protection plate 8.

The Actuation module 1 preferably contains the motors that drive the elements of the cleaning module 2 and is connected to the control and command module 6 which controls it. It also contains valves that open and shut the air streams and the water jets.

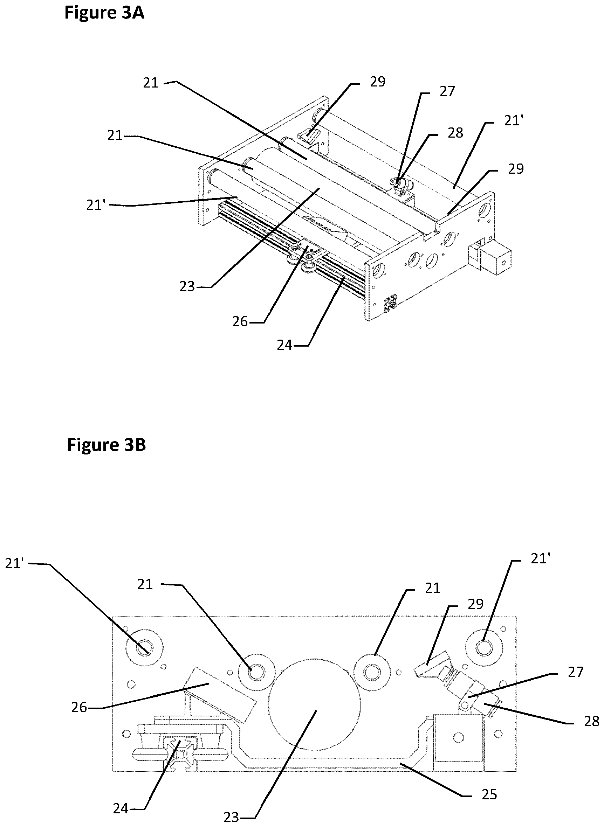

The cleaning station will be explained later after the wheel cleaning module. The wheel cleaning module is detailed in figures 3A to 3C.

It comprises several bearings preferably having the form of rollers 21, linear actuators 24 and at least one brush 23. Preferably these elements are connected together via respective linkage connections. It also comprises a support 25 shown in figure 3B and preferably having a bridge shape to facilitate its use and enhance its efficiency.

The rollers 21, 21' are disposed in a parallel manner so as to bear or support a wheel to be cleaned and are controlled by the activation unit 1 so as to permit rotation of the wheel. It is important here to note that the rollers 21, 21' can function in different ways according to the type of vehicle coming to the station. For example, for a mechanical wheelchair which has free wheels, the rollers 21, 21' are controlled so as to rotate and therefore drive in rotation the wheels with them. On the contrary, for a vehicle where the wheels are not free such as an electric wheelchair, the rollers 21, 21' are controlled to be free such that it is the wheels of the wheelchair which can rotate by themselves and drive the rollers 21, 21' without being hindered by any resistance.

In order to decide which mode is to be used, i.e. if the rollers 21, 21' shall rotate to drive the wheels or be free to be rotated by the wheels, different options can be used. The choice can be actively made upfront by the user via a user interface on the control and command module 6 or via a telephone embedded application. Alternatively, the choice can be passively made via automatic recognition of the type of vehicle, this can be done through testing the resistance to turning the wheels, a camera and an AI software recognizing between an image of a mechanical wheelchair and an image of an electric wheelchair, or via a RFID tag embedded within the wheelchair detected by the cleaning station 100, or the same.

According to a preferred embodiment, the rollers 21, 21' are rotated together at the same velocity. The number of rollers 21, 21' is not particularly limited. In the figures, one can see four rollers 21, 21'. Ideally this permits that the two central rollers 21 are adapted to support and maintain stable small wheels (such as front wheels) while the two external rollers 21" are adapted to support and stabilize and centralize larger wheels such as back wheels of wheelchairs. Additional rollers may be present to further enhance stabilization. Also, one can see that the internal rollers 21 are lower (in height position) than the two external ones 21', this permits further improvement of stabilization since the rollers 21, 21' are therefore preferably somehow located on a virtual circumference of the wheel to be cleaned.

According to a further embodiment, the height of the rollers 21, 21' may be variable, by using springs or the same, so as to adapt themselves to the shape of a wheel incoming the system.

In addition to the rollers 21, 21', the cleaning module 2 comprises a brush 23 that is controlled to either rotate counter-wise to the wheel or at a different speed than the wheel. The key feature here being that there is differential movement between the brush 23 and the wheel thereby leading to friction between the brush 23 and the wheel to permit a cleaning action of the brush 23 onto the wheel. It is very preferable that the brush 23 is disposed parallel to the rollers 21, 21' so as to maximize the brushing efficiency.

In addition to these elements, the cleaning module 2 comprises a movable support, preferably having the form of a bridge 25, mounted on a linear actuation assembly 24 and adapted to move along the width of the cleaning module 2, preferably parallelly to the rollers 21, 21' and the brush 23 and therefore essentially perpendicular to the wheels or the vehicle direction.

The movable bridge 25 is configured to at least support a scanning module 26 and a cleaning liquid spraying module 27. Optionally, it may also support a drying module 28.

The liquid spraying module 27 is preferably at least one nozzle connected to a High-pressure water pump that feeds pressured water to it. The drying module 28 is preferably at least one nozzle connected to a High-pressure air pump that feeds pressured air to it. According to an embodiment both modules my share the same nozzle.

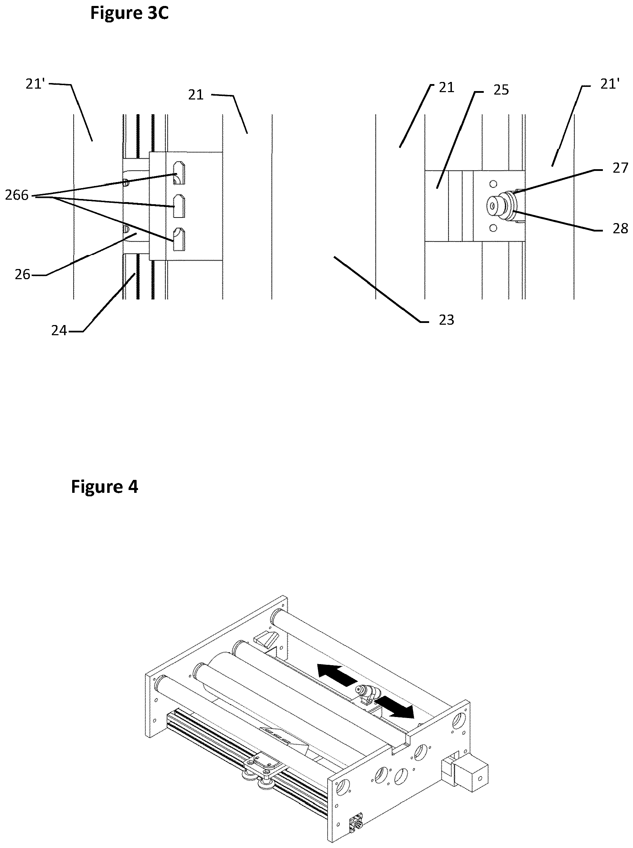

The scanning module 26 comprises at least two sensors 266, shown in figure 3C whish represent an upper view of the bridge 25, preferably three, which can be IR sensors, laser sensors, range finding sensors or the same and are adapted to detect the position and width of a wheel by detecting the lateral edges of this wheel.

According to a preferred embodiment depicted in figure 3C and 4, the wheel sensors 266 are disposed on one end of the bridge (here the entry/left end) and the liquid spraying module 27, and possibly the drying module 28, is disposed on the other end (the exit/right end) so as to face each other. The sensors 266 are placed on the module 26 so as to be located on each side of the liquid spraying module 27 in the width direction of the module i.e. the moving direction of the bridge (represented by the arrows in figure 4). Although they could be placed on the same end of the bridge 25 as the liquid spraying module 27, the figures show them on the other side of the bridge 25. This permits to have a third sensor 266 which improves the accuracy of the cleaning module 2 and may act as a wheel detector and also permits to keep the sensors clean. During functioning, the bridge 25 executes a fast back and forth movement limited by the detection of the edge of the wheel. For example, when the left sensor 266 detects the left lateral edge of the wheel (by not detecting the wheel anymore for example), the bridge 25 stops and is moved in the opposite direction until the right sensor 266 detects the right lateral edge of the wheel. The bridge is then stopped again and moved in the opposite direction. Since the liquid spraying module 27 (and preferably the drying module) is disposed between the two sensors 266, this ensures that it always faces the wheel's surface and continuously sprays the wheel without splashing the user or the wheelchair.

Regarding the drying module 28, it should preferably be adapted to be able to dry both the wheel after cleaning but also the brush and/or the rollers between two cleaning sessions. For this reason, the cleaning module may comprise a drying nozzle orienting means which permits to control the orientation of the nozzle 28 of the drying module in direction of the wheel or the brush depending on the situation.

In the same manner, the module comprises nozzle positioning modules 29 preferably disposed at one end of the Linear actuation assembly 24, and which is adapted to lower the nozzle 27 to position it to clean the brush 23. At the other end it positions the nozzle 27 to position it to clean the wheel.

The cleaning station 100 will be explained in more details. As explained above, it preferably comprises an actuation module 1, one or more cleaning modules 2, a cleaning liquid spraying module 3, a drying module 4 and a water extraction module 5. Additionally, the station 100 may comprise a control and command module 6, ramps 7 and possibly a protection plate 8.

The Actuation module 1 preferably contains the motors that drive the elements of the cleaning module 2 and is connected to the control and command module 6 which controls it.

It has to be noted that the exact number of cleaning modules may vary depending on the type of vehicle for which it has to be used. For this reason, in the present embodiment depicted in figures 1 and 2, where we refer to a wheelchair, two modules are disposed parallelly so as to receive the left and right wheels of the wheelchair, respectively. Alternatively, three cleaning modules may be used in a "triangular" arrangement if it has to be used for a three wheeled vehicle with a single wheel in the front.

According to the preferred embodiment, the two modules are disposed parallelly next to each other with the actuation module 1 in between in such a manner that each roller of the left module is linked to each roller of the right modules so as to rotate together.

The station also comprises a water extraction pump that extracts the water collected in the cleaning modules.

The Control and Command module 6 contains the electronics and power management. It features an interfacing panel with various inputs such as buttons. It features the interaction panel with a screen, a speaker and wireless communication.

Optional Ramps 7 can be used to access the station, but these are obviously not needed if the station is disposed within the soil. Also, the protection plate 8 is preferably placed over the station to protect the actuation module 1.

Regarding the station and more particularly its size, it is chosen through the standards of wheelchairs. A standard maximum width of a wheelchair is 90 cm so as to be able to pass through an open door and the minimal width is 28 cm, therefore it is reasonable and preferable to have the module presenting a maximum width of 31 cm.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Wheel cleaning device (2) comprising
a wheel support module (21, 21') adapted to support said wheel in a rotative manner,
a cleaning liquid spraying module (27) adapted to spray high pressure cleaning liquid onto a wheel's surface,
**characterized in that** it further comprises a wheel scanning module (26) adapted to scan a surface of the wheel and determine the lateral edges of the wheel, and
a control module adapted to control the cleaning liquid spraying module (27) based on the results of the wheel scanning module (26) so as to limit the cleaning liquid spraying zone within the detected lateral edges of the wheel so as to spray cleaning liquid exclusively onto the surface of the wheel.

2. Device according to claim 1, **characterized in that** it further comprises a brushing module (23) adapted to brush said supported wheel.

3. Device according to claim 2, **characterized in that** said brushing module (23) is a cylindrical brush (23) adapted to come in contact with the wheel and to be rotated in a direction different from the wheel rotation or in the same rotation direction but at a different speed.

4. Device according to anyone of claims 1 to 3, **characterized in that** it further comprises a wheel detector adapted to automatically detect the presence of a wheel chosen from the group of an optical detector, a weight detector or similar.

5. Device according to claim 4, **characterized in that** said wheel detector is said wheel scanning module.

6. Device according to any one of claims 1 to 5, **characterized in that** it further comprises a wheel type identification module adapted to identify a wheel type and control the cleaning process accordingly.

7. Device according to claim 6, **characterized in that** the wheel type identification module comprises an image capturing device and an AI software capable of identifying the type of wheel on the captured image and accordingly adapt the cleaning process.

8. Device according to any one of claims 1 to 4, **characterized in that** the wheel support module (21, 21') comprises rollers (21, 21') disposed parallelly which are adapted to be rotated to drive the wheel in rotation or to be free to let the wheel rotate by itself.

9. Device according to any one of claims 1 to 4, **characterized in that** the wheel support module (21, 21') comprises at least two pairs of rollers (21, 21') comprising a first internal pair (21) disposed a first height and adapted to support and maintain stable wheels presenting a first diameter and a second external pair (21') disposed at a second height and adapted to support and maintain stable wheels presenting a second diameter, wherein the second diameter is larger than the first diameter.

10. Device according to any one of claims 1 to 6, **characterized in that** the wheel scanning module (26) comprises at least two sensors (266) positioned on each side of the cleaning liquid spraying module (27) in the width direction of the module.

11. Device according to any one of claims 1 to 7, **characterized in that** it comprises a bridging element (25) mounted on a linear actuation assembly (24) and supporting the wheel scanning module (26) at one end and the cleaning liquid spraying module (27) at the other end configured to be moved back and forth along the width direction of the module (2).

12. Device according to any one of claims 1 to 11, **characterized in that** it further comprises a drying module (28) adapted to spray high pressure air onto the wheel surface.

13. Device according to any one of claims 1 to 12, **characterized in that** it the cleaning liquid spraying module (27) comprises at least one nozzle connected to a High-pressure water pump that feeds it the cleaning liquid.

14. Device according to any one of claims 12 or 13, **characterized in that** it further comprises drying and/or spraying nozzle positioning modules (29) preferably disposed at the ends of the linear actuation assembly (24) and adapted to lower and/or raise the nozzle to position it to clean/dry the brush (23) or the wheel.

15. Wheel cleaning station comprising a wheel cleaning device (2) of any one of claims 1-14.
